# EUROPÄISCHE PATENTSCHRIFT

(11) **EP 0 767 948 B1**
(45) Veröffentlichungstag und Bekanntmachung des Hinweises auf die Patenterteilung: **26.08.1998**
(21) Anmeldenummer: 94918754.6
(22) Anmeldetag: 29.06.1994
(51) Int. Cl.: G09B 29/10, G08G 1/0968, G08G 1/123

(54) **ELEKTRONISCHES FAHRPLAN-AUSKUNFTSSYSTEM FÜR ÖFFENTLICHE VERKEHRSMITTEL**
ELECTRONIC PUBLIC TRANSPORT TIME TABLE INFORMATION SYSTEM
SYSTEME ELECTRONIQUE D'INFORMATION ET D'INDICATION D'HORAIRES POUR TRANSPORTS PUBLICS

(43) Veröffentlichungstag der Anmeldung: 16.04.1997
(73) Patentinhaber: SIEMENS AKTIENGESELLSCHAFT, 80333 München (DE)
(72) Erfinder: VON TOMKEWITSCH, Romuald, D-82067 Ebenhausen (DE); OBERSTEIN, Karla, D-81669 München (DE); FEIL, Thomas, D-81245 München (DE)
(86) Internationale Anmeldenummer: DE9400754
(87) Internationale Veröffentlichungsnummer: WO9600960

(56) Entgegenhaltungen:
- EP-A- 0 392 374
- EP-A- 0 451 756
- EP-A- 0 538 514
- WO-A-92/17002
- WO-A-93/18495
- WO-A-94/02923
- FR-A- 2 663 446
- US-A- 5 072 395

## Beschreibung

Die Erfindung betrifft ein elektronisches Fahrplan-AuskunftsSystem für öffentliche Verkehrsmittel gemäß dem Oberbegriff des Anspruchs 1.

Zur Kosteneinsparung bzw. Rationalisierung bauen öffentliche Verkehrsbetriebe bemannte Auskunftsstellen, an denen man günstigste Verbindungen und Fahrzeiten öffentlicher Verkehrsmittel erfragen kann, immer mehr ab. Soll die Attraktivität dieser Verkehrssysteme nicht leiden, müssen Informationsschalter durch moderne elektronische Auskunftsautomaten ersetzt werden.

In der europäischen Patentanmeldung 0 538 514-A1 wird ein Auskunftssystem mit Handterminal beschrieben, das gegenüber bestehenden elektronischen Fahrplan-Auskunftssystemen Vorteile bietet. Die Idee, potentiellen Benutzern öffentlicher Verkehrsmittel elektronische Hilfen auf Basis von tragbaren Personal-Computern oder Notebooks anzubieten, wird inzwischen an vielen Stellen aufgegriffen.

Diese Geräte - im amerikanischen Sprachgebrauch PDA's (Personal Digital Assistance) genannt - erfordern alle, daß Netz- und Fahrplandateien für die betreffenden Städte oder Regionen in Form von Disketten oder Memorycards von ihren Besitzern beschafft und in das entsprechende Terminal eingesteckt werden. Reisende, die einmalig oder nur selten eine fremde Stadt besuchen, werden sich jedoch nicht ohne weiteres entschließen, diese Dateien zu kaufen. Ehe sie entsprechende Geschäfte aufsuchen und den Preis für diese Datenträger entrichten, werden sie in vielen Fällen Taxen besteigen, zumal diese Dateien bei Fahrplanwechsel veralten und nach einiger Zeit wertlos werden.

Ein weiterer Nachteil dieser Geräteklasse besteht in einer unzureichenden Aktualität ihrer Informationen. Betriebsstörungen, die sich als Verspätungen oder Totalausfälle der Verkehrsmittel auswirken, können von autarken Geräten nicht berücksichtigt werden. Es gibt zwar die Idee, Auskunftsterminals mit Rundfunkgeräten (ohne Tonteil) zu versehen, die über den sogenannten Traffic Message Channel (RDS/TMC) von Rundfunksendern aktualisierte Daten übertragen bekommen. Auch über den Mobilfunk könnte man eine Aktualisierung bewirken. Durch die Ergänzungen mit Empfangsgeräten werden diese Geräte jedoch noch größer und teuerer.

In dem Dokument WO-A-9 402 923 ist ein Informationssystem für Benutzer von städtischen Verkehrsmitteln beschrieben. Dieses weist Auskunftsbaken auf, die ihre Daten entweder durch öffentliche Versorgung oder von Betriebszentralen der entsprechenden Verkehrsbetriebe erhalten, sowie ein mikroprozessorbetriebenes Handterminal, welches im Besitz des Fahrgasts zur Abfrage und Anzeige dieser Daten dient. Die Auskunftsbaken senden dauernd, d.h. ohne Aufforderung durch Fahrgäste ihre Daten, während das Handterminal zur Ausübung seiner Funktion nur über einen Empfänger zum Empfang dieser Daten verfügt. Dieses System gibt lediglich Auskunft über Verkehrs- bzw. Fahrplandaten, die beispielsweise Fahrzeiten, Wartezeiten, Verspätungen, Fahrziele der öffentlichen Verkehrsmittel betreffen. Eine gezielte Wegweisung zu einem bestimmten eingebbaren Ziel, also eine Routenführung, die über das reine Fahrnetz hinausgeht, ist dort nicht vorgesehen und mit diesem bekannten System auch nicht möglich.

Das Dokument FR-A-2 663 446 offenbart auch ein System für die Benutzer von öffentlichen Verkehrsmitteln, welches neben der Übertragung von Fahrplandaten auch gestattet, mit Hilfe eines Handterminals von Hand aus ein bestimmtes Fahrziel einzugeben, um dieses dann vom Handterminal aus zur Bake zu übertragen. Dieses bekannte System erfordert jedoch im Handterminal zusätzlich einen Sender und in den Baken entsprechende Empfänger, sowie geeignete Datenübertragungs- und Verarbeitungsverfahren sowohl in der Bake, als auch in der entsprechenden Zentrale. Darüber hinaus ist dann entsprechend eine gezielte Informationsübertragung zum betreffenden Handterminal erforderlich. Dieses System ist aufwendig und kostspielig. Es gestattet nicht verhältnismäßig einfache kleiner Handterminals für eine zusätzliche Routenfindung bei einem derartigen Fahrplanauskunftssystem zu verwenden.

Aufgabe der Erfindung ist es, ein elektronisches Fahrplan-Auskunftssystem für öffentliche Verkehrsmittel zu schaffen, welches die oben geschilderten Nachteile vermeidet und mit einem verhältnismäßig einfachen Handterminal betrieben werden kann.

Diese Aufgabe wird mit einem elektronischen Fahrplan-Auskunftssystem für öffentliche Verkehrsmittel gemäß des Anspruchs 1 gelöst.

Weitere Ausgestaltungen und Vorteile der Erfindung ergeben sich aus den Unteransprüchen.

Im folgenden wird anhand der Zeichnung die Erfindung näher beschrieben.

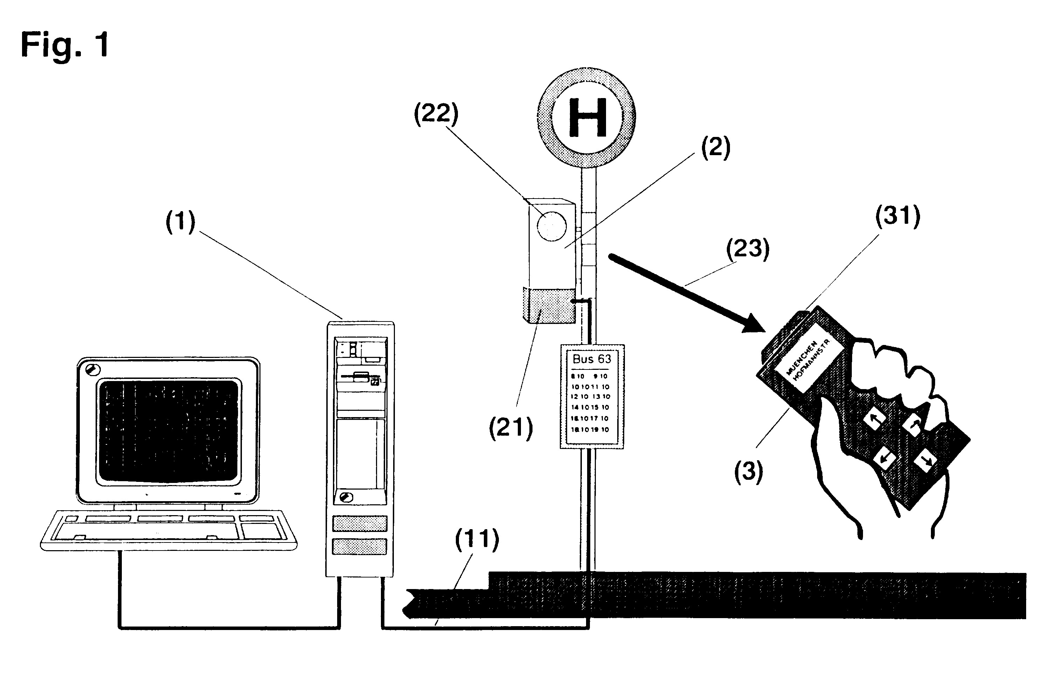

Das erfindungsgemäße elektronische Fahrplan-Auskunftssystem mit einfachen, kleinen und preiswerten Handterminals besteht aus drei Hierarchiestufen (Fig. 1):
- Einem Rechner 1 mit zentraler Datenhaltung aller für ein Gebiet und eine Fahrplanperiode erforderlichen Netz- und Fahrzeitdaten, z.B. in einer Betriebszentrale,
- Auskunftsbaken 2 an möglichst allen Haltestellen, bestehend aus einem Prozessorsystem 21 mit Rechenwerk und Speicher, die in gewissen Abständen - z.B. bei Fahrplanwechsel oder bei Bedarf auch täglich - mit den gültigen Netz- und Fahrzeitdaten versorgt werden, und einem Sender 22 sowie
- Handterminals 3 zur Abfrage und Anzeige der günstigsten Verkehrverbindungen mit sämtlichen Zeit- und Fahrpreisangaben, Umsteige- und Zielhaltestellen.

Die Erneuerung der Daten im Speicher des Bakenprozessors 21 erfolgt entweder durch Versorgung vor Ort oder über eine Leitungsverbindung 11 zwischen dem zentralen Rechner 1 und den Auskunftsbaken 2. Es können aber auch Funkverbindungen, z.B. des Betriebsfunks, über den die meisten öffentlichen Verkehrsbetriebe verfügen, für die Aktualisierung der Daten benutzt werden.

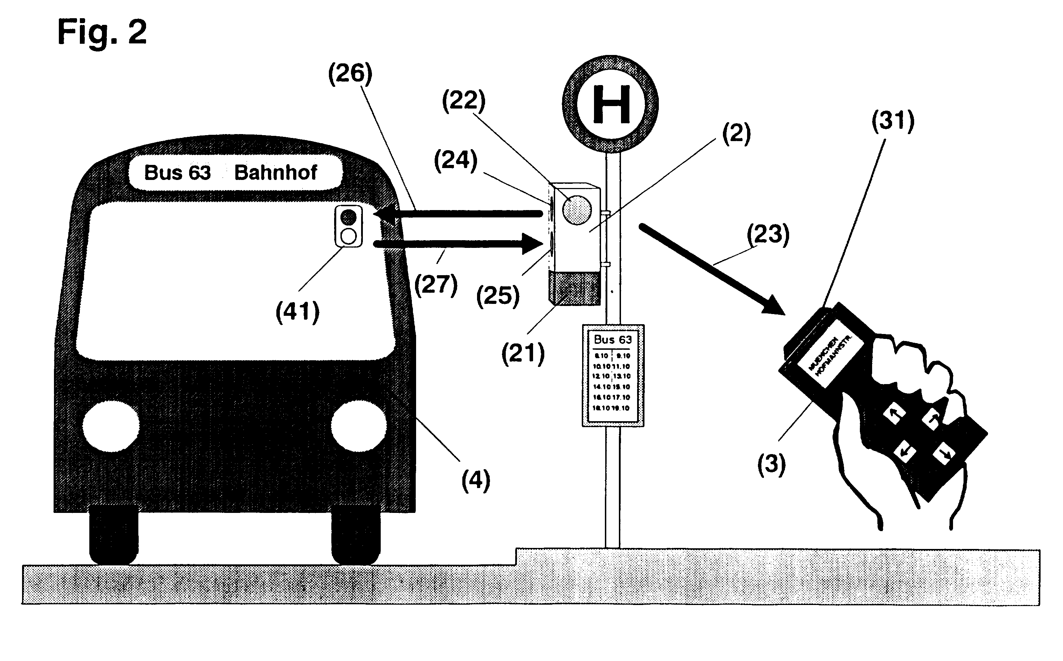

Eine weitere Möglichkeit besteht gemäß der eingangs erwähnten europ. Patentanmeldung, siehe dazu Fig.2, darin, die Verkehrsmittel 4 - Busse und Straßenbahnen - mit sogenannten elektronischen Mailboxen 41 zu versehen und die Auskunftsbaken 2 über diese mit aktuellen Daten zu versorgen. Dazu müssen die Auskunftsbaken 2 mit Sendern 24 und Empfängern 25 versehen werden, die mit der Mailbox 41 in öffentlichen Verkehrsmitteln kommunizieren. Diese Kommunikation erfolgt im Dialog: Die Auskunftsbaken 2 melden dauernd ihr Kennzeichen 26, was von der Mailbox 41 als Aufforderung zum Senden aktueller Daten aufgefaßt wird. Diese Daten werden vom Prozessor 21 der Auskunftsbake 2 empfangen und anstelle der bisherigen gespeichert.

Die Mailbox 41 in öffentlichen Verkehrsmitteln 4 erhält ihre neuen Daten in nicht näher dargestellter Weise über Versorgungsbaken bei der Ausfahrt aus dem Depot. Die Versorgungsbaken ihrerseits werden vom zentralen Rechner 1 gespeichert.

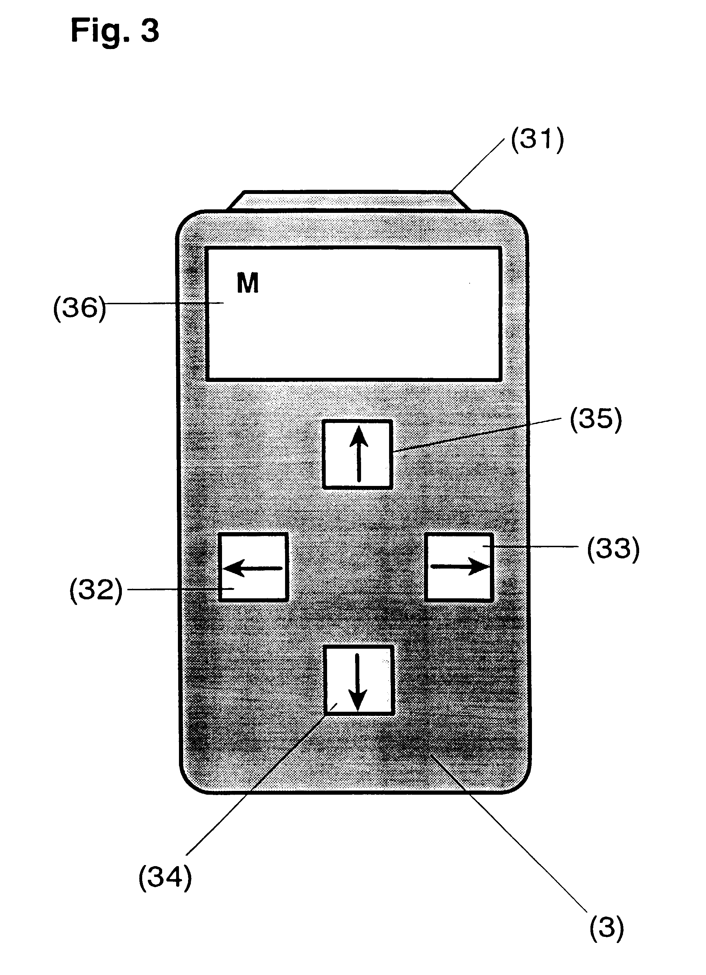

Das Handterminal 3 (Fig.3), verfügt erfindungssgemäß - im Gegensatz zu dem in obengenannter Patentanmeldung beschriebenen System - nur über einen Empfänger 31. Es kann durch Verzicht auf einen Sender und die Dialogfähigkeit mit den Auskunftsbaken einfacher und preiswerter gestaltet werden. Auch das Übertragungsprotokoll vereinfacht sich entsprechend. Zwischen Auskunftsbaken 2 und Handterminal 3 ist in vorteilhafter Weise nur eine Einwegkommunikation 23 notwendig. Die Abfahrtshaltestelle muß dem System nicht bekanntgegeben werden, denn sie wird durch die Position des Fahrgastes an ihrer Auskunftsbake 2 bestimmt. Diese sendet permanent, d.h. ohne durch Anfrage dazu aufgefordert zu werden, gruppenweise alle notwendigen Informationen aus, um den Fahrtverlauf von ihr zu jeder Adresse im Versorgungsgebiet des betreffenden öffenlichen Verkehrsbetriebes ermitteln zu können. Das sind:
- alle Ortsnamen von Städten bzw. Dörfern, die mit den betreffenden öffentlichen Vekehrsmitteln der Region erreichbar sind, einschließlich der Fahrpreise.
- Die Straßennamen aller Orte oder auch nur einzelner Orte. Bei längeren Straßen können diese auch in Hausnummernbereiche unterteilt werden.
- Die Beschreibung der Netzkonfiguration mit dem Verlauf der Linien und Namen der Haltestellen.
- Die Fahrpläne.

Der Fahrgast hat lediglich den oder die ersten Buchstaben des Namens seines Zielortes in sein Handterminal einzugeben, siehe Fig.3. Das geschieht durch Blättern mit den Tasten 32 und 33. Bei jedem Tastendruck der Taste 33 erscheinen in der ersten Zeile des Anzeigefeldes 36 Buchstaben in alphabetischer Reihenfolge. Durch Drücken der Taste 32 kann zurückgeblättert werden. Hat man auf diese Weise den gewünschten Anfangsbuchstaben - z.B. "M" - gewählt, gibt man das dem System durch Betätigung der Taste 35 zu erkennen.

Das Terminal sucht sich daraufhin aus den von der Auskunftsbake 2 empfangenen Daten zunächst den Datenblock mit den Ortsnamen heraus, die mit den eingegebenen Anfangsbuchstaben beginnen, speichert ihn und zeigt den ersten Ortsnamen an. Durch Blättern - wiederum mit Hilfe der Tasten 32 und 33 - erscheinen alle weiteren Ortsnamen mit gleichen Anfangsbuchstaben in alphabetischer Reihenfolge, bis der Fahrgast den gewünschten liest - z.B. MUENCHEN - und mit der Taste 35 qittiert. Die Ermittlung des Straßennamens erfolgt mit der gleichen Prozedur.

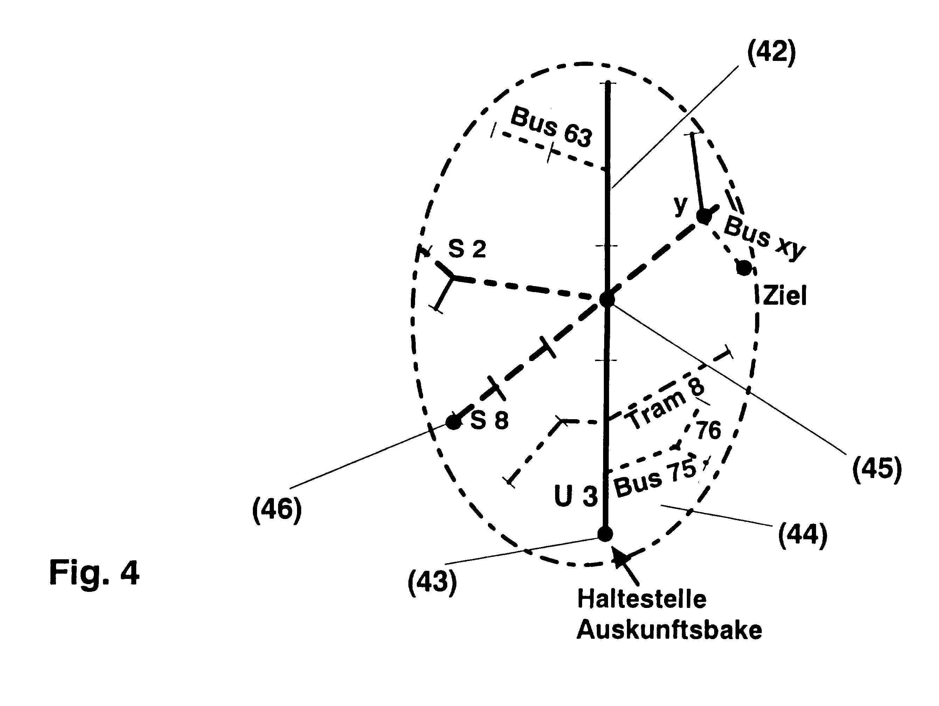

Hat der Fahrgast auf diese Weise die Namen von Ort und Straße seines Zieles durch Betätigung der Taste 35 ausgewählt, wird der eigentliche Auskunftsvorgang eingeleitet. Der Prozessor im Handterminal 3 hat schon die Netz- und Fahrzeitdaten empfangen und gespeichert und berechnet aus diesen die für den aktuellen Zeitpunkt geltende Route, siehe in Fig.4 z.B. 42. Eine Route beginnt z.B. bei der Haltestelle der betreffenden Auskunftsbake 43, führt weiter mit der U3 bis 45, von dort mit der S8 bis y, dann mit Bus xy bis zum Ziel.

Diese Daten zusammen mit Abfahrts- und Ankunftszeiten werden im Anzeigefeld 36 (Fig.3) dargestellt. Dabei können die Anzeigen jeweils in Anzeigeblöcke von z.B. zwei Zeilen mit z.B. sechzehn Zeichen unterteilt werden. Auf diese Weise erreicht man, daß auch Fahrgäste, für die der Umgang mit Computern ungewohnt ist, nicht durch zu viele, auf einmal angezeigte Informationen verwirrt werden.

Im Anzeigefeld 36 erscheinen:
- Liniennummer und Fahrtrichtung des geeignetsten Verkehrsmittels und dessen Abfahrtszeit.
- Namen von Bahnhöfen oder Haltestellen, an denen umgestiegen werden muß, mit Angabe des entsprechenden Verkehrsmittels, seiner Fahrtrichtung und der Abfahrtszeit.
- Name des Zielbahnhofs oder der Zielhaltestelle mit der Ankunftszeit.
- Fahrpreis.

Der Fahrgast kann selbst bestimmen, wie schnell die einzelnen Anzeigen erscheinen und ob sie wiederholt werden sollen: Durch Betätigung der Taste 35 kann er die jeweils nächste anfordern, durch Drücken der Taste 34 kann er zurückblättern. Gibt es mehrere Fahrtmöglichkeiten, so werden sie nacheinander angezeigt. Der Fahrgast kann wählen, ob er nicht umsteigen will, aber dafür einen längeren Fußweg in Kauf nimmt oder ob er es vorzieht, ein oder mehrmals umzusteigen, um so näher an seinen Zielort heranzufahren.

Nach einer gewissen Zeit schaltet das Handterminal die Anzeigen ab, um die Batterie zu schonen. Ein Tastendruck auf einer der Tasten genügt, um sie wieder einzuschalten. Das kann an jeder Stelle geschehen, z.B. auch während der Fahrt in einem der Verkehrsmittel, um sich Einzelheiten der Informationen in Erinnerung zu rufen. Ein erneuter Kontakt mit einer Auskunftsbake ist dazu nicht erforderlich.

Die Netz- und Fahrzeitdaten können bei ausgedehnten Nahverkehrsnetzen größerer Regionen sehr umfangreich sein. Zur Eingrenzung des preisbestimmenden Speichers in den Handterminals 3 muß deren Speicherkapazität jedoch beschränkt werden. Deshalb können Netzdaten und Fahrpläne in Weiterbildung der Erfindung unterteilt werden.

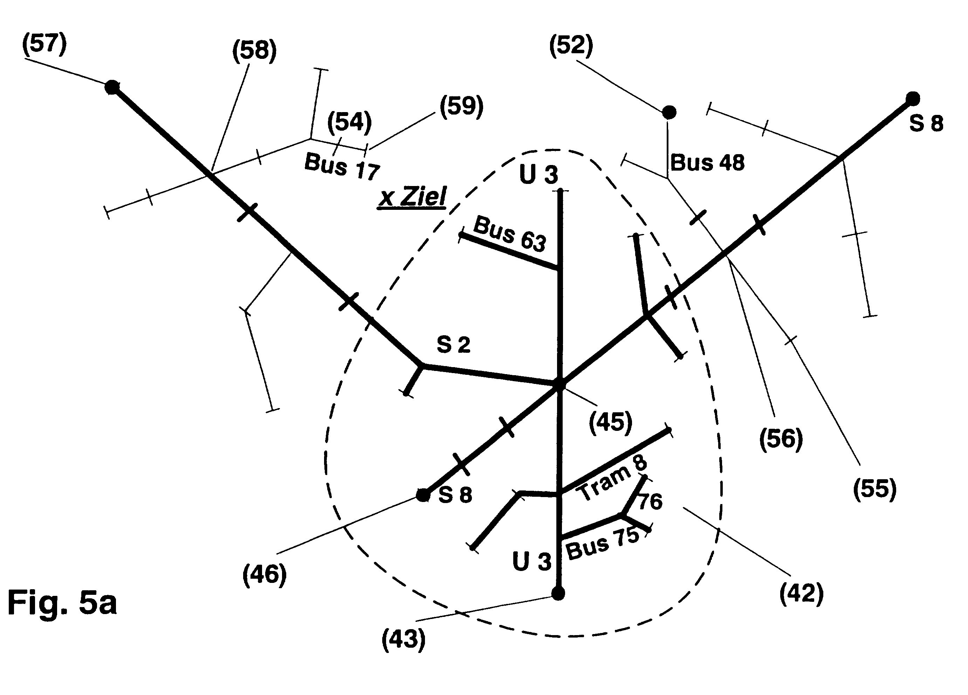

Innerhalb eines Bereiches enthalten alle Baken das vollständige Netz innerhalb dieses Bereiches und zusätzlich das Schnellbahnsystem der gesamten Region, wie dies in Fig. 5a dargestellt ist.

Liegen Quelle und Ziel einer Fahrt innerhalb des gleichen Bereiches, so kann der Fahrgast zu Beginn seiner Fahrt die volständige Information von der Quelle zum Ziel bekommen. Liegen Quelle und Ziel in unterschiedlichen Bereichen, so sind noch Informationen für den Übergang zwischen diesen Bereichen notwendig.

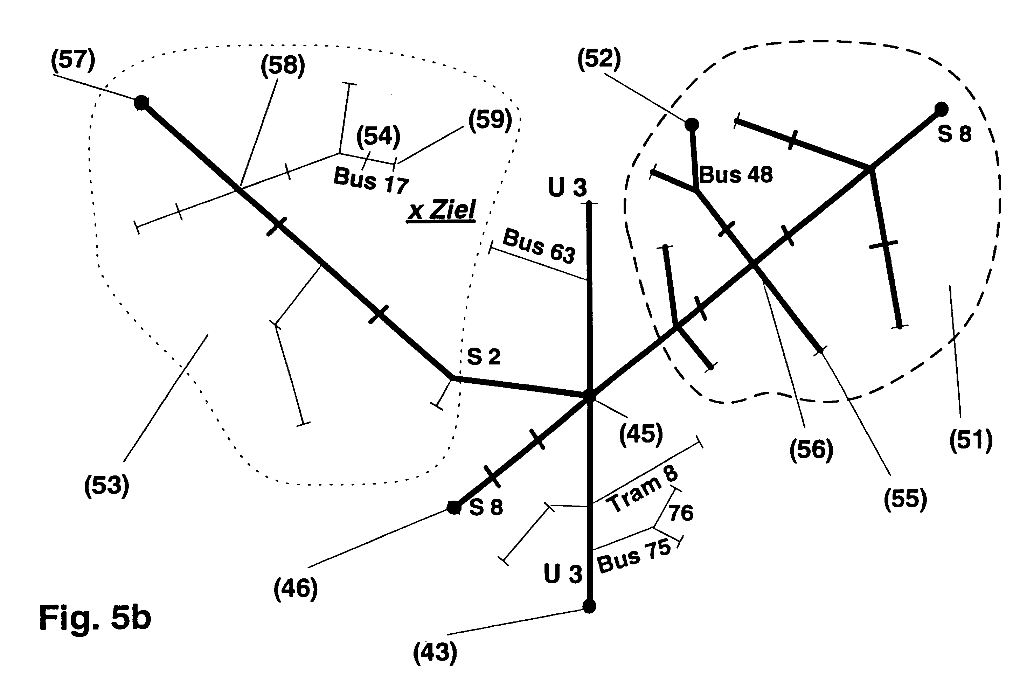

Möchte ein Fahrgast beispielsweise wissen, wie er von der Haltestelle 52 in der Teilregion 51 (siehe dazu Fig.5b) zur Haltestelle 54 fahren kann, so erhält sein Handterminal von der Auskunftsbake an der Haltestelle 52 alle Daten zur Berechnung der detaillierten Route für die Teilregion 51. Zusätzlich wird noch ein Grobnetz für die übergeordnete Region übergeben. Dieses Grobnetz kann z.B. alle S-Bahnen und U-Bahnen des gesamten Bereiches enthalten oder auch nur Teile davon.

Zu jedem möglichen Ziel (Orts- und eventuell Straßenname) wird eine Übergangshaltestelle definiert. Diese kann entweder Endhaltestelle für das betreffende Ziel sein (im allgemeinen dann, wenn das Ziel in der Teilregion 51 enthalten ist) oder auch nur Umsteigestelle (das ist im allgemeinen dann der Fall, wenn das Ziel in der übergeordneten Region liegt). Die Haltestellen sind entsprechend ihrer Art gekennzeichnet.

Da sowohl Ziele (Orts- und Straßenname) als auch Haltestellen mit Koordinaten versehen sind, läßt sich jeweils die Luftlinienentfernung von der Haltestelle zum Ziel berechnen und anzeigen. Ein Benutzer kann dann jeweils selbst entscheiden, ob es sich für ihn lohnt, weitere Informationen anzufordern oder ob die Entfernung zu gering ist.

An der Haltestelle 52 bzw. unterwegs kann sich der Fahrgast den Routenverlauf bis zum Umsteigebahnhof 58 ausgeben lassen, mit dem Hinweis, in welches Verkehrsmittel er wann und wo umsteigen muß, und daß an 58 neue Information angefordert werden muß. Im angeführten Beispiel würde er folgende Anzeige erhalten:
- Bus Nr. 48, Richtung 55 um 7.05 Uhr
- Umsteigen am Bahnhof 56
- S8, Richtung Bahnhof 46 um 7.12 Uhr
- Umsteigen am Bahnhof 45 in S2 in Richtung 57
- S2, Richtung 57 um 7.35 Uhr
- Umsteigen am Bahnhof 58
- Luftliniendistanz (Fußweg)

Am Bahnhof 58 muß das Handterminal in der eingangs beschriebenen Weise von dessen Auskunftsbake mit den Orts- und Haltestellennamen sowie den Netz- und Fahrzeitdaten für die Teilregion 53 versorgt werden. Daraufhin kann sich der Fahrgast folgende weitere Informationen ausgeben lassen.
- Bus Nr. 17 in Richtung 59 um 7.51 Uhr
- Zielhaltestelle 54 an 8.03 Uhr
- Luftliniendistanz (Fußweg)

Gemäß der eingangs erwähnten Patentanmeldung können Auskunftsbaken 2 an den Masten von Haltestellen montiert werden. An diesen Masten existieren aber meistens keine Netzanschlüsse für eine notwendige Stromversorgung. Deswegen wird erfindungsgemäß vorgeschlagen, Auskunftsbaken an Masten von Straßenverkehrssignalanlagen zu montieren und sie so weit und breit gefächert strahlen zu lassen, daß Fahrgäste mit ihren Handgeräten die Daten in einem größeren Bereich in der Umgebung der Haltestelle empfangen können.

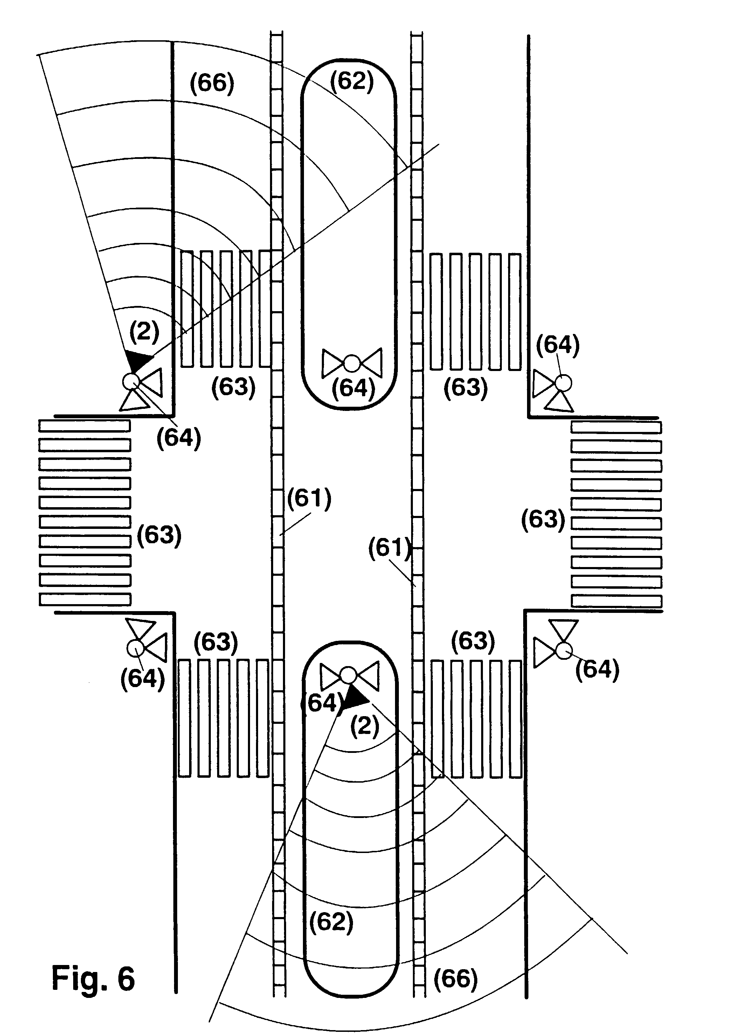

Fig. 6 zeigt eine mögliche Anordnung von Auskunftsbaken an einer Straßenkreuzung mit Straßenbahnhaltestellen. In der Skizze sind Straßenbahngleise 61 dargestellt, die an Mittelinseln 62 mit Haltestellen vorbeiführen. Fußgängerüberwege sind durch Zebrastreifen 63 und Lichtsignalanlagen 64 gesichert. An günstig positionierten Masten dieser Signalanlagen werden Auskunftsbaken 2 montiert, die ihre Daten in ein fächerförmiges Gebiet 66 ausstrahlen. Fahrgäste können diese Daten empfangen, solange sie sich in diesem Gebiet 66 aufhalten und ihre Handterminals 3 mit deren Empfängern 31 auf diese Auskunftsbaken 2 ausrichten.

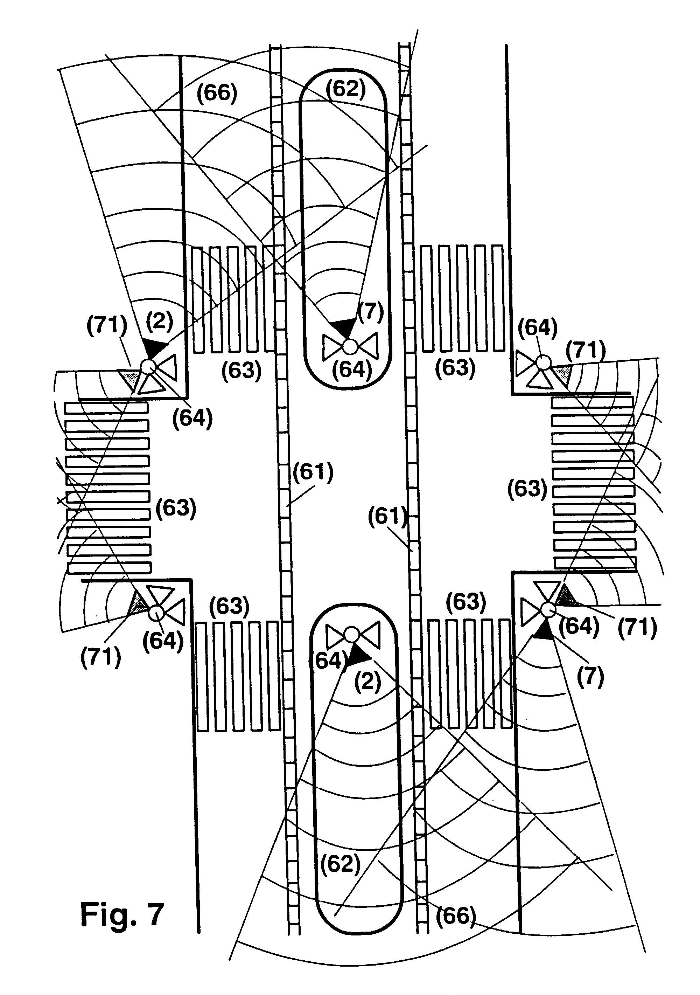

Auch Kombinationen der Auskunftsbaken 2 mit Leitbaken für ein Verkehrsleit- und Informationssystem für Kraftfahrer ist denkbar. Ein solches Leitsystem ist in der deutschen Patentschrift DE 29 23 634 C2 beschrieben. Auch Leitbaken werden an Signalmasten montiert und strahlen ihre Informationen ständig aus. Ihre Strahlung wird den Fahrzeugströmen entgegengerichtet. Fig. 7 zeigt eine mögliche Anordnung an einer Kreuzung. Die Sendeteile von Auskunftsbaken 2 und Leitbaken 7 bzw. 71 sind bei dieser Kombination identisch. Sie werden lediglich derart an unterschiedliche Steuerteile angeschaltet, daß sie zeitweise Leitinformationen 71 für den Individualverkehr und zeitweise Fahrgastinformationen 2 bzw. 7 für die öffentlichen Verkehrsmittel senden. Dabei macht man sich den Umstand zunutze, daß Kraftfahrzeuge während der Rotsignalphasen halten müssen, damit Fußgänger die Fahrbahnen überqueren können. Auskunftsinformationen und Leitinformationen werden also alternierend in die verschiedenen Zufahrten einer Kreuzung gesendet - je nachdem, ob Fußgänger oder Kraftfahrzeuge Grünlicht erhalten.

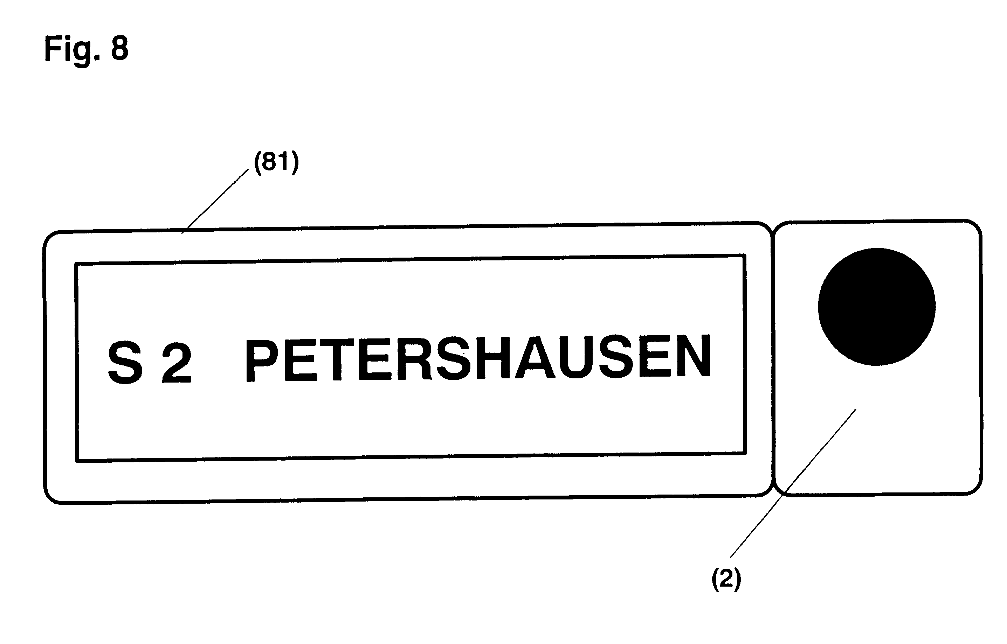

Auskunftsbaken 2 sind erfindungsgemäß auch mit Zuganzeigen 81 kombinierbar (Fig.8). Besonders zweckmäßig ist eine solche Lösung, wenn öffentliche Verkehrsmittel, die in verschiedene Teilregionen 44,53 fahren, dieselben Bahnhöfe und Bahnsteige benutzen. Korespondierend mit der Zuganzeige 81 können in solchen Fällen die Auskunftsbaken 2 Informationen für die Teilregionen senden, für die die Ankunft des entsprechenden Verkehrsmittels angekündigt wird.

Im Beispiel gemäß der Fig.5b sendet eine Ausgangsbake am Umsteigebahnhof 45 während der Vorankündigungszeit für das Verkehrsmittel (S2) die Daten für die Teilregion 53. Sobald dieses Verkehrsmittel die Umsteigestation verlassen hat und das nächste angekündigt wird, beginnt auch die Auskunftsbake die entsprechenden Informationen für die nächste Teilregion zu senden.

Auskunftsbaken, die unterschiedliche Informationen für verschiedene (Teil-)Regionen senden können, werden erfindungsgemäß auch für Züge vorgeschlagen. Fernzüge, die auf ihrer Fahrt in verschiedenen Städten halten, werden mit solchen Auskunftsbaken ausgestattet. Die Sendeteile dieser Baken können beispielsweise an den einzelnen Waggons angeordnet werden und senden vor dem Halten die Daten für den öffentlichen Personennahverkehr in der betreffenden Stadt.

Erfindungsgemäß wird vorgeschlagen, als Übertragungsmedium Infrarot zu verwenden, weil diese Strahlungsart keinen Elektrosmog verursacht, weil bei Infrarot keine Interferenzen bzw. Signalauslöschungen infolge Mehrwegeausbreitung auftreten und weil die Sendebereiche verschiedener benachbarter Auskunftsbaken an einer Haltestelle, die identische Informationen aussenden, sich überlappen dürfen, ohne sich gegenseitig zu stören.

## Patentansprüche

1. Elektronisches Fahrplan-Auskunftssystem für öffentliche Verkehrsmittel, bestehend aus Auskunftsbaken (2), die ihre Daten entweder durch örtliche Versorgung oder von Betriebszentralen (1) der entsprechenden Verkehrsbetriebe erhalten, sowie mit einem Mikroprozessor betriebene Handterminals (3) im Besitz der Fahrgäste zur Abfrage und Anzeige dieser Daten, wobei die Auskunftsbaken (2) dauernd, d.h. ohne Aufforderung durch Fahrgäste, ihre Daten senden und die Handterminals zur Ausübung ihrer Funktion nur über Empfänger (31) zum Empfang dieser Daten (23) verfügen,
**dadurch gekennzeichnet,**
daß die Baken (2) an Haltestellen angeordnet sind, daß zusätzlich zu den Fahrplan-Daten, Daten von Orts- und Straßennamen gesendet werden, welche im Handterminal (3) abspeicherbar sind, wobei die von den Baken gesendeten Daten in Datengruppen unterteilt sind, von denen eine die Namen aller Orte und eventuell dazugehörigen Straßen in einer von einem öffentlichen Verkehrssystem erschlossenen Region, eine andere eine Beschreibung des Liniennetzes der betreffenden öffentlichen Verkehrsmittel und eine weitere die Fahrpläne enthält, und daß die Fahrziele in den Handterminals in Form von Ortsund Straßennamen vom Fahrgast eingebbar sind, wobei durch Blättern jeweils nur der bzw. die ersten Buchstaben des Ortsbzw. des Straßennamens einzugeben sind.

2. Elektronisches Fahrplan-Auskunftssystem nach Anspruch 1,
**dadurch gekennzeichnet,**
daß die Ortsnamen und die Straßennamen in den jeweiligen Datengruppen blockweise in alphabetischer Reihenfolge gesendet und gespeichert werden, wobei der Prozessor des Handterminals entweder die Datengruppen mit den Orts- und Straßennamen blockweise speichert und diejenigen Daten gleich wieder verwirft, in denen die Namen nicht mit den vom Fahrgast gewählten Anfangsbuchstaben beginnen, oder die Datenblöcke der Datengruppen, in denen die Orts- bzw. Straßennamen mit den gewählten Anfangsbuchstaben beginnen, vollständig speichert, wobei durch weiteres Blättern in diesen Datenblöcken der gewünschte Orts- und Straßenname auslesbar und anzeigbar ist.

3. Elektronisches Fahrplan-Auskunftssystem nach Anspruch 1 oder 2, **dadurch gekennzeichnet,** daß die Ortsnamen und die Straßennamen in den jeweiligen Datengruppen blockweise in alphabetischer Reihenfolge gesendet werden.

4. Elektronisches Fahrplan-Auskunftssystem nach Anspruch 1,2 oder 3, **dadurch gekennzeichnet,** daß die Fahrtziele in den Handterminals in Form von Orts- und Straßennamen vom Fahrgast eingebbar sind, wobei durch Blättern jeweils nur der bzw. die ersten Buchstaben des Orts- bzw. des Straßennamens einzugeben sind.

5. Elektronisches Fahrplan-Auskunftssystem nach Anspruch 4, **dadurch gekennzeichnet,** daß der Prozessor in Handterminals die Datengruppen mit den Orts- und Straßennamen blockweise speichert und diejenigen gleich wieder verwirft, in denen die Namen nicht mit den vom Fahrgast gewählten Anfangsbuchstaben beginnen.

6. Elektronisches Fahrplan-Auskunftssystem nach Anspruch 3 oder 4, **dadurch gekennzeichnet,** daß die Datenblöcke der Datengruppen, in denen die Orts- bzw.Straßennamen mit den gewählten Anfangsbuchstaben beginnen, vollständig gespeichert werden, wobei durch weiteres Blättern in diesen Datenblöcken der gewünschte Orts- und Straßenname auslesbar und anzeigbar ist.

7. Elektronisches Fahrplan-Auskunftssystem nach einem der vorhergehenden Ansprüche, **dadurch gekennzeichnet,** daß der Prozessor des Handterminals einen Zielspeicher enthält, der die Speicherung einer Reihe von Fahrzielen ermöglicht, so daß einmalig gespeicherte Ziele ohne die beschriebene Einstellprozedur aus dem Zielspeicher immer wieder durch Blättern auslesbar und anzeigbar sind.

8. Elektronisches Fahrplan-Auskunftssystem nach einem der vorhergehenden Ansprüche, **dadurch gekennzeichnet,** daß in den Prozessor des Handterminals ein Programm für die Berechnung von Routen aus den Liniennetz- und Fahrplandaten einschreibbar ist.

9. Elektronisches Fahrplan-Auskunftssystem nach einem der vorhergehenden Ansprüche, **dadurch gekennzeichnet,** daß bei größeren Regionen in der Ortsnamendatei hinter dem Namen die Bezeichnungen der Übergangsstationen verzeichnet sind, so daß die Liniennetz- und Fahrplandaten zur Begrenzung der Datenmengen unterteilbar sind.

10. Elektronisches Fahrplan-Auskunftssystem nach Anspruch 9, **dadurch gekennzeichnet,** daß bei größeren Regionen die zu übertragenden Daten aufgeteilt werden in **Detail**daten für die unmittelbare Umgebungsregion und **Grob**daten für die gesamte Region, wobei Detaildaten alle Ortsnamen und alle zugehörigen Straßennamen einer bestimmten Teilregion, das vollständige Liniennetz mit zugehörigem Fahrplan dieser Teilregion, soweit die Routen berechnet werden sollen, und Grobdaten alle Ortsdaten der Gesamtregion, Straßennamen nur für eine Untermenge dieser Orte und ein Grobnetz einer Region einschließlich zugehörigem Fahrplan, gegebenenfalls nur bis zu weiteren eindeutigen Anschlußpunkten, aufweisen.

11. Elektronisches Fahrplan-Auskunftssystem nach Anspruch 9 oder 10, **dadurch gekennzeichnet,** daß die Beschreibung der Verbindungen, Liniennummern, Fahrtrichtungen, gegebenenfalls Bahnsteigbezeichnungen, Abfahrtszeiten, die Namen von Umsteigestellen, die Liniennummern und Fahrtrichtungen der weiterführenden Linien, deren Abfahrtszeiten, den Namen des Zielbahnhofes bzw. der Zielhaltestelle, die Ankunftszeit, den Fahrpreis und erforderlichenfalls die Anzahl der zu entwertenden Tarifzonen enthält.

12. Elektronisches Fahrplan-Auskunftssystem nach Anspruch 11, **dadurch gekennzeichnet,** daß die Beschreibung der Verbindungen blockweise in relativ kleinen Anzeigeblöcken erfolgt, die z.B. aus zwei Zeilen je sechzehn Zeichen bestehen können.

13. Elektronisches Fahrplan-Auskunftssystem nach Anspruch 12, **dadurch gekennzeichnet**, daß die Anzeigeblöcke durch Voroder Rückblättern auf dem Handterminal beliebig oft anzeigbar sind.

14. Elektronisches Fahrplan-Ausknftssvstem nach Anspruch 13, **dadurch gekennzeichnet,** daß bei Existieren von mehreren Fahrtmöglichkeiten zum eingegebenen Fahrtziel diese anzeigbar sind, so daß eine Auswahlmöglichkeit besteht zwischen einem längeren Fußweg oder einem Umsteigen in weiterführende Verkehrsmittel.

15. Elektronisches Fahrplan-Auskunftssystem nach einem der vorhergehenden Ansprüche, **dadurch gekennzeichnet,** daß die Auskunftsbaken (2) auch an Masten von Lichtsignalanlagen (64) installiert sind.

16. Elektronisches Fahrplan-Auskunftssystem nach einem der vorhergehenden Ansprüche, **dadurch gekennzeichnet,** daß eine Kombination von Auskunftsbaken (2) mit Leitbaken (7) für den Kraftfahrzeugverkehr an ein und derselben Kreuzung kombiniert sind, wobei Auskunftsdaten und Leitdaten alternierend mit Fußgänger- bzw. Kraftfahrzeugflüssen korrespondierend, gesendet werden.

17. Elektronisches Fahrplan-Auskunftssystem nach einem der Ansprüche 1 bis 13, **dadurch gekennzeichnet,** daß die Auskunftsbaken auch an Zuganzeigen für den öffentlichen Nahbzw. Fernverkehr installiert sind.

18. Elektronisches Fahrplan-Auskunftssystem nach Anspruch 16, **dadurch gekennzeichnet,** daß die Auskunftsbaken (2) mit den Zuganzeigen (81) kombiniert sind, wobei Auskunftsdaten alternierend mit den Zuganzeigen für verschiedene Teilregionen korrespondierend, gesendet werden.

## Claims

1. Electronic public transportation timetable information system, comprising information beacons (2), which obtain their data either by local supply or from operations centres (1) of the appropriate transportation bodies, as well as hand-held terminals (3) which are operated by a microprocessor and are in the possession of the passengers for the purpose of interrogating and displaying these data, it being the case that the information beacons (2) transmit their data continuously, that is to say without being requested by passengers, and for the purpose of exercising their function the hand-held terminals have available only receivers (31) for receiving these data (23), characterized in that the beacons (2) are arranged at stops, in that, in addition to the timetable data, data on place names and street names are transmitted which can be stored in the hand-held terminal (3), the data transmitted from the beacons being subdivided into data groups of which one contains the names of all the places and, possibly the associated streets in a region covered by a public transportation system, and another one contains a description of the relevant public transportation line network and a further one contains the timetables, and in that the destinations can be input into the hand-held terminals by the passenger in the form of place and street names, it being the case that by paging in each case only the first letter or letters of the place name and of the street name are to be input.

2. Electronic timetable information system according to Claim 1, characterized in that the place names and the street names in the respective data groups are transmitted and stored in a blockwise fashion in alphabetical order, it being the case that the processor of the hand-held terminal either stores the data groups with the place and street names in a blockwise fashion and immediately rejects again those data in which the names do not begin with the initial letters selected by the passenger, or the data blocks of the data groups in which the place names or street names begin with the selected initial letters, are stored in their entirety, it being possible for the desired place name and street name to be read out and displayed by further paging in these data blocks.

3. Electronic timetable information system according to Claim 1 or 2, characterized in that the place names and the street names in the respective data groups are transmitted in a blockwise fashion in alphabetical order.

4. Electronic timetable information system according to Claim 1, 2 or 3, characterized in that the destinations can be input into the hand-held terminals by the passenger in the form of place and street names, it being the case that by paging in each case only the first letter or letters of the place name and of the street name are to be input.

5. Electronic timetable information system according to Claim 4, characterized in that the processor in the hand-held terminal stores the data groups with the place names and street names in a blockwise fashion and immediately rejects again those in which the names do not begin with the initial letters selected by the passenger.

6. Electronic timetable information system according to Claim 3 or 4, characterized in that the data blocks of the data groups in which the place names or street names begin with the selected initial letters are stored in their entirety, it being possible for the desired place name and street name to be read out and displayed by further paging in these data blocks.

7. Electronic timetable information system according to one of the preceding claims, characterized in that the processor of the hand-held terminal contains a destination memory which permits the storage of a number of destinations, with the result that destinations once stored can be read out and displayed again and again from the destination memory by paging without the described setting procedure.

8. Electronic timetable information system according to one of the preceding claims, characterized in that a program for calculating routes from the line network data and timetable data can be written into the processor of the hand-held terminal.

9. Electronic timetable information system according to one of the preceding claims, characterized in that in the case of larger regions the designations of the transfer stations are recorded in the place name file after the name, with the result that the line network data and timetable data can be subdivided for the purpose of limiting the data sets.

10. Electronic timetable information system according to Claim 9, characterized in that in the case of larger regions the data to be transmitted are split into detailed data for the immediate surrounding region and coarse data for the overall region, detailed data having all the place names and all the associated street names of a specific subregion, the complete line network with associated timetable of this subregion, to the extent that the routes are to be calculated, and coarse data having all the place data of the overall region, street names only for a subset of these places and a coarse network for a region including associated timetable, if appropriate only up to further unique connection points.

11. Electronic timetable information system according to Claim 9 or 10, characterized in that the description of the connections contains line numbers, travel directions, if appropriate platform designations, departure times, the names of transfer points, the line numbers and travel directions of the continuing lines, their departure times, the name of the destination railroad station or the destination stop, the arrival time, the fare and, if necessary the number of the fare zones to be expected.

12. Electronic timetable information system according to Claim 11, characterized in that the description of the connections is performed in a blockwise fashion in relatively small display blocks which can comprise, for example, two rows of sixteen characters each.

13. Electronic timetable information system according to Claim 12, characterized in that the display blocks can be displayed as often as desired by paging forward or backpaging on the hand-held terminal.

14. Electronic timetable information system according to Claim 13, characterized in that given the existence of a plurality of travel possibilities to the input destination the former can be displayed, with the result there is a possibility of selecting between a longer way on foot or transferring to continuing transportation means.

15. Electronic timetable information system according to one of the preceding claims, characterized in that the information beacons (2) are also installed on masts of traffic light systems (64).

16. Electronic timetable information system according to one of the preceding claims, characterized in that a combination of information beacons (2) with guide beacons (7) for motor vehicle traffic is provided at one and the same intersection, information data and guide data being transmitted alternately in a fashion corresponding to pedestrian and motor vehicle flows.

17. Electronic timetable information system according to one of Claims 1 to 13, characterized in that the information beacons can also be installed on train displays for public suburban or long-distance transportation.

18. Electronic timetable information system according to Claim 16, characterized in that the information beacons (2) are combined with the train service displays (81), information data being transmitted alternately in a fashion corresponding to the train service displays for different subregions.

## Revendications

1. Système électronique de renseignements et d'indications d'horaires pour des moyens de transport en commun, constitué de balises (2) de renseignements qui reçoivent leurs données par une alimentation locale ou de centrales (1) d'exploitation de transport correspondantes, ainsi que de terminaux (3) manuels qui fonctionnent par un microprocesseur et par lesquels les passagers qui les possèdent peuvent interroger et afficher ces données, les balises (2) de renseignements émettant leurs données en continu, c'est-à-dire sans demande des passagers, et les terminaux manuels ne disposant, pour exercer leur fonction, que de récepteurs (31) servant à recevoir ces données (23), caractérisé en ce que les balises (2) sont montées à des stations, en ce qu'il est émis, en plus des données d'horaires, des données de noms de lieux et de noms de rues qui sont mémorisées dans le terminal (3) manuel, les données émises par les balises étant réparties en groupes de données, dont l'un contient les noms de tous les lieux et rues éventuellement associés d'une région desservie par un système de transport en commun, dont un autre contient une description du réseau de lignes des moyens de transport en commun concernés et dont un autre encore contient les horaires, et en ce que les destinations peuvent être entrées dans le terminal manuel par le passager sous la forme de noms de lieux et de noms de rues, seules la première lettre ou les premières lettres du nom de lieu ou du nom de rue pouvant être entrées par défilement.

2. Système électronique de renseignements et d'indications d'horaires suivant la revendication 1, caractérisé en ce que les noms de lieux et les noms de rues des groupes de données associés sont émis et mémorisés par bloc par ordre alphabétique, le processeur du terminal manuel mémorisant par bloc les groupes de données comportant les noms de lieux et les noms de rues et rejetant tout de suite les donnée dans lesquelles les noms ne commencent pas par les lettres initiales choisies par le passager, ou mémorisant les blocs de données des groupes de données dans lesquels les noms de lieux et les noms de rues commencent par les lettres initiales choisies, le nom de lieu et le nom de rue souhaités pouvant être sortis et affichés en continuant de faire défiler ces blocs de données.

3. Système électronique de renseignements et d'indications d'horaires suivant la revendication 1 ou 2, caractérisé en ce que les noms de lieux et les noms de rues des groupes de données associés sont envoyés par bloc par ordre alphabétique.

4. Système électronique de renseignements et d'indications d'horaires suivant la revendication 1, 2 ou 3, caractérisé en ce que les destinations peuvent être entrées dans le terminal manuel par le passager sous forme de noms de lieux et de noms de rues, le passager ne pouvant entrer par défilement que la première lettre ou les premières lettres du nom de lieu ou du nom de rue.

5. Système électronique de renseignements et d'indications d'horaires suivant la revendication 4, caractérisé en ce que le processeur des terminaux manuels mémorise par groupes les groupes de données comportant les noms de lieux et les noms de rues et rejette tout de suite ceux dans lesquels les noms ne commencent pas par les lettres initiales choisies par le passager.

6. Système électronique de renseignements et d'indications d'horaires suivant la revendication 3 ou 4, caractérisé en ce que les blocs de données des groupes de données dans lesquels les noms de lieux et les noms de rues commencent par les lettres initiales choisies sont mémorisés en totalité, le nom de lieu et le nom de rue souhaités pouvant être sortis et affichés en continuant de faire défiler ces blocs de données.

7. Système électronique de renseignements et d'indications d'horaires suivant l'une des revendications précédentes, caractérisé en ce que le processeur du terminal manuel contient une mémoire de destination qui permet de mettre en mémoire une série de destinations, si bien que des destinations mémorisées une fois peuvent être toujours sorties de la mémoire de destination et affichées par défilement, sans la procédure de mise en place décrite.

8. Système électronique de renseignements et d'indications d'horaires suivant l'une des revendications précédentes, caractérisé en ce que l'on peut entrer dans le processeur du terminal manuel un programme de mise au point d'itinéraires à partir des donnée relatives au réseau de lignes et aux horaires.

9. Système électronique de renseignements et d'indications d'horaires suivant l'une des revendications précédentes, caractérisé en ce que, pour des régions assez grandes, il est répertorié dans le fichiers de noms de lieux, après le nom, les désignations des stations de transit, si bien que les données relatives au réseau de lignes et aux indications d'horaires peuvent être séparées pour limiter les quantités de données.

10. Système électronique de renseignements et d'indications d'horaires suivant la revendication 9, caractérisé en ce que, pour d'assez grandes régions, les données à transmettre sont réparties en données de détails pour les alentours et en données grossières pour toute la région, des données de détails comportant tous les noms de lieux et tous les noms de rues associés d'une région partielle déterminée, le réseau de ligne complet avec les horaires associés de cette région partielle, dans la mesure où les itinéraires doivent être mis au point, et des données grossières comportant toutes les données de lieux de l'ensemble de la région, des noms de rues seulement pour une partie de ces lieux et un réseau grossier d'une région, avec l'horaire associé, éventuellement seulement jusqu'à d'autres points de raccordement clairement définis.

11. Système électronique de renseignements et d'indications d'horaires suivant la revendication 9 ou 10, caractérisé en ce que la description des liaisons, des numéros de lignes, des directions, éventuellement des désignations de quais, des heures de départ, contient les noms de lieux de changement, les numéros de lignes et direction des lignes qui vont plus loin, leur heure de départ, le nom de la gare de destination ou de la station de destination, l'heure d'arrivée, le tarif et, si nécessaire, le nombre des zones tarifaires pour lesquelles un billet doit être composté.

12. Système électronique de renseignements et d'indications d'horaires suivant la revendication 11, caractérisé en ce que la description des liaisons s'effectue par bloc en blocs d'indications relativement petits qui peuvent être constitués par exemple de deux lignes comportant chacune 16 signes.

13. Système électronique de renseignements et d'indications d'horaires suivant la revendication 12, caractérisé en ce que les blocs d'indications peuvent être affichés sur le terminal manuel aussi souvent qu'on le souhaite par défilement vers l'avant ou vers l'arrière.

14. Système électronique de renseignements et d'indications d'horaires suivant la revendication 13, caractérisé en ce que, lorsqu'il existe plusieurs possibilités d'itinéraire pour aller à la destination entrée, ces possibilités peuvent être affichées, si bien que l'on a la possibilité de choisir entre un trajet à pied plus long ou un changement pour des moyens de transport qui vont plus loin.

15. Système électronique de renseignements et d'indications d'horaires suivant l'une des revendications précédentes, caractérisé en ce que les balises (2) de renseignements sont installées aussi sur des mâts (64) d'installation à signaux lumineux.

16. Système électronique de renseignements et d'indications d'horaires suivant l'une des revendications précédentes, caractérisé en ce que des balises (2) de renseignements sont combinées à des balises (7) de guidage du trafic de véhicules automobiles à une même et seule intersection, des données de renseignements et des données de guidage étant émises en alternance, de manière correspondant au flux de piétons et au flux de véhicules automobiles.

17. Système électronique de renseignements et d'indications d'horaires suivant l'une des revendications 1 à 13, caractérisé en ce que les balises de renseignements sont installées aussi sur des pancartes de trains pour le trafic public de banlieues et de grandes lignes.

18. Système électronique de renseignements et d'indications d'horaires suivant la revendication 16, caractérisé en ce que les balises (2) de renseignements sont combinées aux pancartes (81) de trains, des données de renseignements étant émises en alternance, en correspondance avec les indications de trains pour diverses régions partielles.
